(19)

Europäisches
Patentamt
European
Patent Office
Office européen
des brevets

(11) **EP 1 959 316 A2**

(12) **EUROPEAN PATENT APPLICATION**

(43) Date of publication:
    **20.08.2008  Bulletin 2008/34**

(51) Int Cl.:
    ***G03H 1/02*** (2006.01)

(21) Application number: **08002469.8**

(22) Date of filing: **11.02.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventor: **Kamo, Makoto**<br>**Ashigarakami-gun**<br>**Kanagawa (JP)** |
| (30) Priority: **16.02.2007  JP 2007035667** | (74) Representative: **Grünecker, Kinkeldey,**<br>**Stockmair & Schwanhäusser**<br>**Anwaltssozietät**<br>**Leopoldstrasse 4**<br>**80802 München (DE)** |
| (71) Applicant: **FUJIFILM Corporation**<br>**Minato-ku**<br>**Tokyo 106-8620 (JP)** | |

(54) **Holographic recording medium and method of manufacturing holographic recording medium**

(57)     A holographic recording medium (1) with a plurality of layers including a recording layer (12), on which are recorded interference patterns generated by interference of information light and reference light. The recording layer is attached to at least one adjacent layer (11,13) with adhesive (14).

FIG. 1

EP 1 959 316 A2

**Description**

BACKGROUND OF THE INVENTION

The present invention relates to a holographic recording medium on which data is recorded using interference of light waves, and a method of manufacturing such a holographic recording medium.

In recent years, development has been carried out for holographic recording media with a recording layer in the shape of a thick film, on which an extremely large number of data is recorded as interference patterns using interference of light waves. The following two manufacturing methods have been conventionally and mainly known as manufacturing methods for such holographic recording media.

According to the first conventional method such as disclosed in Japanese Laid-open Patent Application No. 2005-17589, a photosensitive resin solution is charged in a space formed between two parallel substrates and the recording layer is formed by the action of surface tension. The photosensitive resin solution self cures so that the recording layer is integrally formed with the other two substrates, thereby providing a holographic recording medium.

According to the second conventional method such as disclosed in Japanese Laid-open Patent Application No. 2001-5368, there is provided a disk-shaped cell having a donut-shaped inner hollow portion, and an opening is formed at a part of the disk-shaped cell in communication with the inner hollow portion. A photosensitive resin solution is charged through the opening and into the hollow portion, followed by heating or exposing to light, so that the photosensitive resin solution is cured to form a recording layer, thereby providing a holographic recording medium.

The aforementioned two methods do not require the use of an adhesive layer between the recording layer and the substrate, which results in an optically excellent holographic recording medium. The photosensitive resin solution used for these manufacturing methods may be: (1) thermoplastic resin which requires a high-temperature melting process for molding, such as disclosed in a conference paper (non-patent reference) of Brian Lawrence, Xiaolei Shi, Eugene Boden, Christoph Erben, Kathryn Lngley, Mare Dubois, Matthew Nielsen, International Conference on Holography 2005 (Holography 2005), Abstract, P78, Varna, Bulgaria, May 2005; or (2) thermoplastic resin which is cured by heating at a high temperature over a long period of time or thermoplastic resin which requires strict temperature and humidity control, such as disclosed in WO03/014178 (also published as Japanese Translation of PCT International Application No. 2004-537620) (see Comparative example 2).

However, in principle, these conventional methods require to cure the photosensitive resin solution after injecting or charging the same into the hollow portion. This restriction disadvantageously leads to an extremely limited range of material choice for the photosensitive resin solution (recording layer composition). To be more specific, various conditions are required for the photosensitive resin solution used in the conventional methods and these conditions include, for example, lower viscosity, short curing process time, and smaller volume change upon curing. Further, it is necessary to cure the photosensitive resin solution without a distortion on the substrate. Accordingly, the range of material choice is extremely limited.

In view of the above, the present invention seeks to provide a holographic recording medium which offers an extended range of material choice for the recording layer composition, and a method of manufacturing such a holographic recording medium.

SUMMARY OF THE INVENTION

According to one aspect of the present invention, there is provided a holographic recording medium with a plurality of layers including a recording layer. Recorded on the recording layer are interference patterns generated by interference of information light and reference light. The recording layer is attached to at least one adjacent layer with adhesive.

With this construction of the present invention, since the recording layer and at least one adjacent layer are attached with adhesive, these layers may be separately molded and cured in advance. This makes it possible to freely choose materials for the recording layer composition unlike in the case of the conventional methods in which materials for the photosensitive resin solution are chosen on the basis of various conditions such as viscosity, curing process time, etc.

In the aforementioned holographic recording medium, a refractive index of the adhesive may be determined such that a refractive index $n_s$ of an adhesive layer consisting of the adhesive and a refractive index $n_m$ of the recording layer satisfy the following formulae:

$$0.01 \geq \left(r_p \times R_p\right) + \left(r_s \times R_s\right) \tag{1}$$

$$R_p = \tan^2\{\theta_m - \text{asin}(n_s \div n_m \times \sin\theta_m)\} \div \tan^2\{\theta_m + \text{asin}(n_s \div n_m \times \sin\theta_m)\} \qquad (2)$$

$$R_s = \sin^2\{\theta_m - \text{asin}(n_s \div n_m \times \sin\theta_m)\} \div \sin^2\{\theta_m + \text{asin}(n_s \div n_m \times \sin\theta_m)\} \qquad (3)$$

$$\theta_m = \theta_{wmax} + \theta_r \qquad (4)$$

where $r_p$ is an intensity rate of P polarization of light, $r_s$ is an intensity rate of S polarization of light, $R_p$ is an interface reflectivity of the P polarization, $R_s$ is an interface reflectivity of the S polarization, $\theta_{wmax}$ is the maximum value of surface waviness angles at an interface between the recording layer and the adhesive layer, and $\theta_r$ is the maximum value of an incident light angle relative to the normal line to a central plane line.

This holographic recording medium allows the refractive index $n_s$ of the adhesive layer and the refractive index $n_m$ of the recording layer to be determined based on various parameters affecting reflection and scattering of light at the interface between the adhesive layer and the recording layer. Therefore, it is possible to prevent reflection and scattering of light at the interface.

In the aforementioned holographic recording medium, a surface roughness $R_a$ relative to a mean curve obtained at an interface between the recording layer and the adhesive layer may be in the range of 5-90 nm. According to this holographic recording medium, even in the case where the surface roughness causes reflection/scattering of light (i.e., the period from peak to valley is exceptional), it is possible to prevent reflection/scattering of light.

According to a second aspect of the present invention, there is provided a method of manufacturing a holographic recording medium with a plurality of layers including a recording layer. Recorded on the recording layer are interference patterns generated by interference of information light and reference light. The method comprises the steps of: preparing the recording layer and other layers; and attaching the recording layer to at least one adjacent layer with adhesive.

The aforementioned manufacturing method may further comprise the step of determining a refractive index of the adhesive such that a refractive index $n_s$ of an adhesive layer consisting of the adhesive and a refractive index $n_m$ of the recording layer satisfy the following formulae:

$$0.01 \geq (r_p \times R_p) + (r_s \times R_s) \qquad (1)$$

$$R_p = \tan^2\{\theta_m - \text{asin}(n_s \div n_m \times \sin\theta_m)\} \div \tan^2\{\theta_m + \text{asin}(n_s \div n_m \times \sin\theta_m)\} \qquad (2)$$

$$R_s = \sin^2\{\theta_m - \text{asin}(n_s \div n_m \times \sin\theta_m)\} \div \sin^2\{\theta_m + \text{asin}(n_s \div n_m \times \sin\theta_m)\} \qquad (3)$$

$$\theta_m = \theta_{wmax} + \theta_r \qquad (4)$$

where $r_p$ is an intensity rate of P polarization of light, $r_s$ is an intensity rate of S polarization of light, $R_p$ is an interface reflectivity of the P polarization, $R_s$ is an interface reflectivity of the S polarization, $\theta_{wmax}$ is the maximum value of surface waviness angles at an interface between the recording layer and the adhesive layer, and $\theta_r$ is the maximum value of an incident light angle relative to the normal line to a central plane line.

Further, the aforementioned manufacturing method may further comprise the step of forming a surface of the recording layer such that a surface roughness $R_a$ relative to a mean curve obtained at an interface between the recording layer and the adhesive layer is in a range of 5-90 nm.

These manufacturing methods realize appropriate manufacture of the holographic recording media which can provide the advantages as above.

According to the present invention, the recording layer and at least one adjacent layer can be separately prepared and cured in advance, followed by attaching these layers with adhesive. Therefore, it is possible to offer an extended range of material choice for the recording layer composition.

BRIEF DESCRIPTION OF THE DRAWINGS

Other objects and aspects of the present invention will become more apparent by describing in detail illustrative, non-limiting embodiments thereof with reference to the accompanying drawings, in which:

FIG. 1 is a sectional view illustrating a holographic recording medium according to one preferred embodiment of the present invention; and
FIG. 2 shows relations of various parameters at the interface between the recording layer and the adhesive layer.

DETAILED DESCRIPTION OF THE INVENTION

With reference to the accompanying drawings, one preferred embodiment of the present invention will be described below.

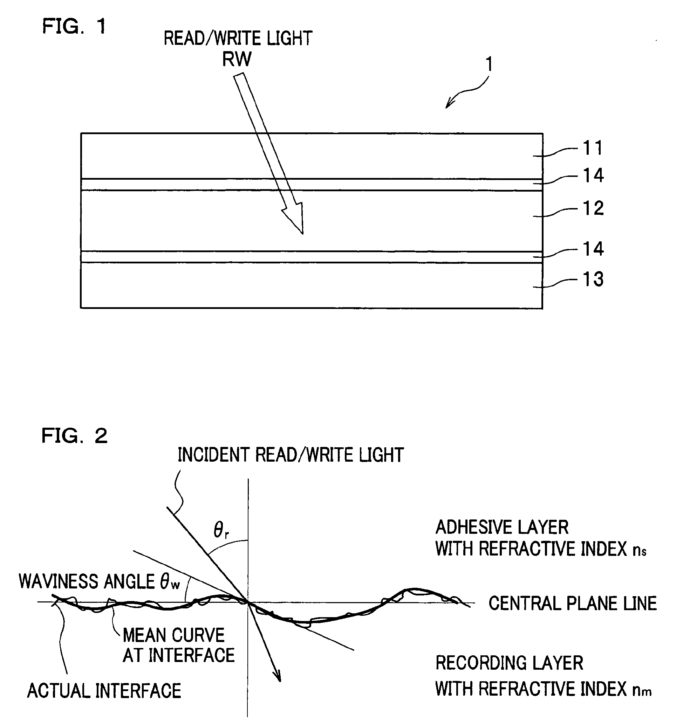

As shown in FIG. 1, a holographic recording medium 1 includes a cover layer 11, a recording layer 12, and a bottom substrate 13. The recording layer 12 is attached to the cover layer 11 and the bottom substrate 13 that are adjacent to the recording layer 12, via adhesive layers 14, 14.

The cover layer 11 is a layer for protecting the upper surface of the recording layer 12. The cover layer 11 is made of a material which allows transmission of read/write light RW whose wave length is approximately 532 nm, for example. Herein, the term "read/write light RW" indicates either one of information light, reference light, and reading light. Any known materials may be used for the cover layer 11 as long as they are sufficiently transparent in the wavelength range of the light used. For example, the cover layer 11 is made of a material such as glass, ceramic, and resin. However, in terms of moldability and cost, resin is particularly preferable.

More specifically, the resin may be polycarbonate resin, acrylic resin, epoxy resin, polystyrene resin, acrylonitrile-styrene copolymer, polyethylene resin, polypropylene resin, silicon resin, fluorocarbon resin, ABS resin, and urethane resin, for example. Of these resins, polycarbonate resin and acrylic resin are particularly preferable in terms of moldability, optical characteristics, and cost.

The cover layer 11 is prepared, for example, by injection molding. The thickness of the cover layer 11 is in the range of 0.1-5 mm, and more preferably in the range of 0.3-2 mm. If the thickness of the cover layer 11 is less than 0.1 mm, it may be difficult for the disk to keep its own shape without deformation during the retention of the disk. Meanwhile, if the thickness of the cover layer 11 is more than 5 mm, the whole weight of the disk becomes large and an excessive load is applied to the drive motor.

The recording layer 12 reacts with the read/write light RW to be irradiated (i.e., by interference between the information light and the reference light), so that data is recorded as interference patterns. The recording layer 12 is molded and cured in advance of attaching to the cover layer 11 and the bottom substrate 13. The recording layer 12 is then attached to the cover layer 11 and the bottom substrate 13 with adhesive (i.e., via the adhesive layers 14, 14). Any known materials may be used as a material for the recording layer 12, and in accordance with application purposes, an appropriate material may be chosen. For example, (1) photopolymers causing a polymerization reaction in response to light irradiation and being highly polymerized, (2) photorefractive materials exhibiting a photorefractive effect (space charge distribution is caused by irradiation of light and thus the refractive index is modulated), (3) photochromic materials whose molecules are isomerized by irradiation of light and the refractive index thereof is modulated, (4) inorganic materials such as lithium niobate, and barium titanate, and (5) chalcogen materials are available.

The recording layer 12 may be prepared by various conventional methods in accordance with materials to be used. In the case where the recording layer 12 is formed on the substrate, for example, a vapor deposition method, a coating method, an LB method, a printing method, and a transfer method are preferable. Further, in the case where the recording layer 12 alone is formed without combination of the other layers, a crystal growth method, a wet film-forming method, a stretching method, and an injection molding method are available. Of these methods, the coating method using the materials (1), (2) and (3) above, the wet film-forming method, and the injection molding method are preferable, and in particular, the wet film-forming method and the injection molding method (especially, liquid injection molding (LIM) method) are more preferable.

The thickness of the recording layer 12 is not limited and can be selected appropriately in accordance with purposes of the recording layer 12. The thickness of the recording layer 12 is preferably in the range of 1 to 1,000 $\mu$m, and more preferably in the range of 100-700$\mu$ m.

The bottom substrate 13 is a layer for protecting the lower surface of the recording layer 12. The bottom substrate 13 is made of the same material as the cover layer 11. Similar to the cover layer 11, the thickness of the bottom substrate 13 is preferably in the range of 0.1-5 mm, and more preferably in the range of 0.3-2 mm.

The adhesive layer 14 is a layer for attaching the pre-molded and cured recording layer 12 to the cover layer 11 or the bottom substrate 13. The adhesive layer 14 is made of a material which allows transmission of read/write light RW. The adhesive layer 14 is preferably made of a material such as light-curable resin, thermosetting resin, and coating-type adhesive resin. To be more specific, the light-curable resin may be photosensitive acrylic resin, photosensitive epoxy resin, etc. The thermosetting resin may be thermosetting acrylic resin, thermosetting epoxy resin, thermosetting polyester resin, thermosetting polyurethane resin, etc. The coating-type adhesive resin may be acrylic resin, polyurethane resin, polyester resin, butyral resin, polyvinyl alcohol resin, polyethylene-polyacrylic acid copolymer, etc. Preferably, in order to prevent deterioration of the recording layer 12 due to light irradiation process, the thermosetting resin or the coating-type adhesive resin is used. More preferably, taking into consideration the adjustment of the refractive index to be described later, it is preferable to use thermosetting resin whose components are easily and finely adjustable. The thickness of the adhesive layer 14 is preferably in the range of 1-40 $\mu$m. It should be noted that the material of the adhesive layer 14 is appropriately selected as described later in accordance with the recording layer 12.

Manner of adjusting the refractive index of the material for the adhesive layer 14 will be described. At first, a base adhesive is determined and the refractive index of the base adhesive is measured in advance. The base adhesive can provide sufficient adhesiveness even when it is used alone. Next, additives such as a diluent, a plasticizer, pigments (dye is preferable) and fillers are added to the base adhesive, and then mixed together so as to provide a desired refractive index that is in conformity with the selection method as described later. Other additives such as a viscosity modifier and a stabilizer may be added when necessary. In general, when mixing these substances, the additivity based on the theory of molecular refraction is established. Therefore, if the mixing ratio of the additives to the base adhesive and the refractive index of the base adhesive are examined in advance, it is possible to prepare adhesive with desired refractive index whose error range is approximately $\pm 0.01$. To be more specific, in the case where the refractive index of the base adhesive made of thermosetting epoxy resin is to be decreased, it is preferable to add an epoxy compound having a polyoxyalkylene chain, such as polyethylene glycol diglycidyl ether and polypropylene glycol diglycidyl ether. On the contrary, in the case where the refractive index of the base adhesive made of thermosetting epoxy resin is to be increased, it is preferable to add an epoxy compound having 9,9'-diphenyl fluorene skeleton, chlorophenyl glycidyl ether, or a plasticizer containing many benzene rings, such as diisopropyl naphthalene and tricresyl phosphate.

Manner of selecting materials for the aforementioned recording layer 12 and the adhesive layer 14, particularly to the method of selecting the refractive index of each layer will be described in detail with reference to FIG. 2.

The refractive index $n_s$ of the adhesive layer 14 is determined using the parameters of FIG. 2, so as to satisfy the following formulae relative to the refractive index $n_m$ of the recording layer 12.

$$0.01 \geq \left(r_p \times R_p\right) + (r_s \times R_s) \tag{1}$$

$$R_p = \tan^2\{\theta_m - \mathrm{asin}\,(n_s \div n_m \times \sin\theta_m)\} \div \tan^2\{\theta_m + \mathrm{asin}\,(n_s \div n_m \times \sin\theta_m)\} \tag{2}$$

$$R_s = \sin^2\{\theta_m - \mathrm{asin}\,(n_s \div n_m \times \sin\theta_m)\} \div \sin^2\{\theta_m + \mathrm{asin}\,(n_s \div n_m \times \sin\theta_m)\} \tag{3}$$

$$\theta_m = \theta_{wmax} + \theta_r \tag{4}$$

where $r_p$ is an intensity rate of P polarization of light, $r_s$ is an intensity rate of S polarization of light, $R_p$ is an interface reflectivity of the P polarization, $R_s$ is an interface reflectivity of the S polarization, $\theta_{wmax}$ is the maximum value of surface waviness angles at an interface between the recording layer 12 and the adhesive layer 14, and $\theta_r$ is the maximum value of an incident light angle relative to the normal line to a central plane line.

To be more specific, each of the above parameters can be obtained from the following observations and measurements.

At first, the surface shape of the recording layer 12 is specified, for example, by cross-section observation using SEM (Scanning Electron Microscope), contact shape observation using AFM (Atomic Force Microscope), or surface shape observation using an optical microscope. More specifically, Japanese Industrial Standard (JIS) discloses methods (stylus-type displacement sensing surface texture measurement method) at JIS B 0601:2001 (ISO 4287:1997) and JIS B 0601:2001 (ISO3274:1996), and these methods can be used for specifying the surface shape of the recording layer 12. JIS B 0601:2001 concerns "Geometrical Product Specifications (GPS) -- Surface texture: Profile method -- Terms, definitions and surface texture parameters".

The surface shape is set, based on the surface shape data obtained by the above measurement method, such that an irregularity whose peak-to-peak period (i.e., length from the center of a valley to the center of the next adjacent valley) is not more than 90 nm is averaged and considered as one valley or one peak. Surface shape evaluation according to the present invention is carried out for the thus obtained irregular curve (mean line) whose peak-to-peak periods are more than 90 nm.

In other words, surface waviness angles $\theta_w$ are obtained on the basis of the irregular curve evaluation method according to JIS B 0601:2001 (ISO 4287:1997) with the cutoff value $\lambda_c$ being set to 90 nm, in which components of the irregular curve less than 90 nm are removed and the resulting mean curve consisting of the remaining components is taken into consideration.

A surface waviness angle $\theta_w$ at one point of the mean curve obtained from the surface shape as set above is determined as an angle between the tangent line of the mean curve and the central plane line. The term "central plane line" indicates a straight line which substantially passes through the center of the mean curve and by which the total area of the regions above the central plane line and surrounded by the mean curve and the central plane line in a sampling length becomes equal to the total area of the regions below the central plane line and surrounded by the mean curve and the central plane line in the sampling length.

Next, measurements are carried out for the whole surface to obtain surface waviness angles $\theta_w$, and the surface waviness angle $\theta_w$ having the maximum value is defined as $\theta_{wmax}$. In order to save the manufacturing time, it is possible to measure the surface waviness angles $\theta_w$ only partly to the whole surface. For example, it is possible to pick up a plurality of measurement points in random manner in a range of the measurement length equal to or more than 1 mm.

It is preferable that $\theta_{wmax}$ is in the range of 0-75°, and more particularly in the range of 0-60°. If $\theta_{wmax}$ is 0° (lower limit), the surface shape of the recording layer 12 does not contain any waviness whose peak-to-peak period is more than 90 nm. If $\theta_{wmax}$ is more than 75° (upper limit), light may be scattered or refracted at the interface between the recording layer 12 and the adhesive layer 14.

If the peak-to-peak period is not more than 90 nm, in general, scattering or diffraction of light does not occur. However, under unusual conditions of the surface shape or the periodicity of the irregularities there is still a possibility that scattering or diffraction of light may occur. Therefore, it is more preferable that the recording layer 12 does not even include such small irregularities. To be more specific, it is desirable that the surface roughness Ra from the mean curve be smaller. Herein, "the surface roughness Ra" is obtained firstly by measuring the absolute values of peaks or valleys from the mean curve of the surface shape to the actual irregularities of the surface shape, followed by arithmetical mean deviation of these absolute values. The aforementioned method can be adopted for the calculation of the mean curve as well as for the measurement of the height of the peaks or valleys of the actual surface shape. Further, at the areas where the peak-to-peak period is not more than 90 nm, the surface roughness Ra is preferably in the range of 0-100 nm, and more preferably in the range of 0-90 nm. The surface roughness Ra of 0 nm (Ra=0) indicates that the mean curve and the actual surface shape are completely conform to each other in terms of measurement. Accordingly, setting the surface roughness Ra in the range of 0-90 nm at the areas where the peak-to-peak period is not more than 90 nm can prevent reflection or scattering of information light, etc., even in a particular case where the surface roughness causes reflection or scattering of information light, etc. (i.e., particular peak-to-peak period).

Although the aforementioned measuring method is based on a one-dimensional measuring method, it is possible to extend this measuring method to a two-dimensional measuring method. In this instance, the term "irregular curve" is replaced with "irregular curved surface", and a surface waviness angle $\theta_w$ at one point of the mean curved surface is determined as an angle between the tangent line drawn to the irregular curved surface and the central plane of the mean curve. The maximum value $\theta_{wmax}$ is defined as the maximum value of the surface waviness angles $\theta_w$. The term "central plane" indicates a plane which substantially passes through the center of the mean curved surface and by which the total volume of the regions above the central plane and surrounded by the mean curved surface and the central plane in a sampling length becomes equal to the total volume of the regions below the central plane and surrounded by the mean curved surface and the central plane in the sampling length. Preferable numerical ranges of $\theta_{wmax}$, etc, are the same as those previously described in the one-dimensional measuring method.

The refractive index $n_s$ of the adhesive layer 14 can be measured by applying the ellipsometry technique, Abbe refractometer, or the principle of a prism coupler, for example. However, the ellipsometry technique is more preferable in terms of accuracy and simplicity. Upon measurement of the refractive index $n_s$ of the adhesive layer 14, for example, a mirror finished silicon wafer whose refractive index is known is prepared. The silicon wafer is spin coated with adhesive as a material of the adhesive layer 14 and is cured. The refractive index is then measured from the resulting film. The refractive index of the adhesive layer according to the present invention indicates the refractive index of the film-like cured adhesive layer that is measured at a temperature of 25°C.

The refractive index $n_m$ of the recording layer 12 can be measured by the same method as the measurement of the refractive index $n_s$ of the adhesive layer 14. However, preparation of the sample is not limited to spin coating, and various known methods are applicable in accordance with compositions of the recording layer to be measured. The refractive index $n_m$ of the recording layer 12 is preferably in the range of 1.38-1.8, and more preferably in the range of 1.4-1.7, and most preferably in the range of 1.45-1.6.

The maximum value of the incident light angle is defined as the maximum incident angle of a light beam relative to the normal line to the central plane line of the surface shape of the recording layer 12 out of light beams used for reading/writing of information. It should be noted that light beams include read/write light RW used for reading/writing of the recording layer 12 as well as a servo light for reading out a servo layer in the case where the servo layer is previously formed in a holographic recording medium. The maximum value of the incident light angle is preferably not more than 80°, more preferably not more than 70°, and most preferably not more than 60°. Further, as the lower limit value of the incident light angle, an inherent value that is individually limited for a system adopted may be used. To be more specific, in the case where a holographic reading/writing system with dual beam interference is adopted, in principle, the maximum value of the incident light angles does not lower equal to or less than a half (1/2) of the angle between the two light fluxes (i.e., information light and reference light). Therefore, the lower limit value for determining the maximum value of the incident light angle may be an angle exceeding a half (1/2) of the angle formed by the two light fluxes. When the information light and the reference light are passed through an objective lens, the lower limit value is inevitably limited by the numerical aperture of the objective lens.

The intensity rates $r_p$ of P polarization of light, the intensity rate $r_s$ of S polarization of light, the interface reflectivity Rp of the P polarization, and the interface reflectivity $R_s$ of the S polarization are measured by known methods. To be more specific, intensity and intensity rate can be measured for a desired light flux that is being passed through a polarizer suitable for the polarization to be measured. Interface reflectivity can be obtained by measuring the reflection intensity of a reflected light (i.e., P polarization or S polarization of the light) that is reflected at a desired interface.

A description will be given of the manufacturing method for a holographic recording medium 1 according to this preferred embodiment.

A plate-like material for the recording layer 12 is prepared in advance. The cover layer 11 and the bottom substrate 13 are also prepared in advance as plate-like materials formed by injection molding. As described previously, the recording layer 12 may be formed as a single plate-like recording layer consisting of the recording layer material alone. Alternatively, the recording layer 12 may be formed in advance on the bottom substrate 13, the cover layer 11, or one of other optional layers. When the recording layer 12 is formed in combination with another optional layer, adhesive is not present at the interface therebetween.

Next, according to the method as described above, the refractive index $n_s$ of the adhesive layer 14 is determined in consideration of the refractive index $n_m$ of the recording layer 12 to be used, and in order to satisfy the relation between these refractive indexes $n_s$ and $n_m$, adhesive, diluent, and refractive index modifier are selected to prepare the adhesive used. The plate-like recording layer 12 is attached to the previously cured cover layer 11, bottom substrate 13 and the like using the adhesive, to thereby manufacture the holographic recording medium 1.

According to the present invention, since each of the layers is adhered using adhesive, the recording layer 12 can be separately molded and cured in advance. This makes it possible to freely choose materials for the recording layer composition unlike in the case of the conventional methods in which materials for the photosensitive resin solution are chosen on the basis of various conditions such as viscosity, curing process time, etc.

Since the refractive index $n_s$ of the adhesive layer 14 is determined relative to the refractive index $n_m$ of the recording layer 12 based on various parameters affecting reflection and scattering of light at the interface between the adhesive layer 14 and the recording layer 12, it is possible to prevent reflection and scattering of light at the interface without imposing any restrictions on the material choice for the recording layer 12. The optical characteristics of the holographic recording medium may deteriorate as the number of interfaces increases upon attachment of each layer using adhesive. However, according to the present invention, the optical characteristics of the holographic recording medium do not deteriorate. In addition to this advantageous effect, attaching the recording layer 12 to other layers with adhesive is also advantageous in terms of decreased manufacturing time, etc., which results in reduction of cost.

According to the manufacturing method including the attachment process of the recording layer 12, each of the interfaces of the recording layer 12 may be formed to have a completely flat surface so as to decrease optical loss other than the relative refractive index difference between the layers. It is also possible that the refractive index of the adhesive layer 14 may be adjusted to be the same as that of the recording layer 12 so as to optically compensate irregularities of the recording layer 12. However, the former method is disadvantageous in terms of cost because molding the recording layer 12 requires accuracy. The latter method is also disadvantageous because the number of options is limited upon selection of compositions for the adhesive and the recording layer, which leads to loss of the advantage of the present invention. Therefore, it is preferable that the refractive index $n_s$ of the adhesive layer 14 is determined relative to the refractive index $n_m$ of the recording layer 12 as with the present invention. Such a method realizes reduction of the cost as well as offering an extended range of material choice for the recording layer composition.

Although the present invention has been described with reference to one preferred embodiment thereof, the present invention is not limited to this specific embodiment and various changes and modifications may be made without departing from the scope of the appended claims.

In the preferred embodiment, the present invention has been adapted to a transmission-type holographic recording medium 1, which includes the cover layer 11, the recording layer 12, and the bottom substrate 13, and in which information is written from the cover layer 11 side and information is read out from the bottom substrate 13 side. However, the present invention is not limited to this specific type. For example, the present invention is also applicable to a reflection-type holographic recording medium, in which information is written and read out from the cover layer 11 side. To be more specific, the holographic recording medium 1 shown in FIG. 1 may further include a reflective layer between the recording layer 12 and the bottom substrate 13. Furthermore, a spacer layer or a filter layer may be provided where necessary.

The layered structure of the holographic recording medium 1 is not limited to the specific structure as described in the preferred embodiment, and other layers may be provided. For example, a servo layer may be provided for servo control.

Further, it should be noted that adhesive is present between the recording layer and at least one adjacent layer. If the recording layer is directly formed on the substrate or another layer without using adhesive, the recording layer is attached to an adjacent layer using adhesive only at the opposite surface that is away from the contacting surface with the substrate or the another layer.

**Claims**

1. A holographic recording medium with a plurality of layers including a recording layer, on which are recorded interference patterns generated by interference of information light and reference light,
   wherein the recording layer is attached to at least one adjacent layer with adhesive.

2. The holographic recording medium according to claim 1, wherein a refractive index of the adhesive is determined such that a refractive index $n_s$ of an adhesive layer consisting of the adhesive and a refractive index $n_m$ of the recording layer satisfy the following formulae:

$$0.01 \geq \left( r_p \times R_p \right) + \left( r_s \times R_s \right) \tag{1}$$

$$R_p = \tan^2\{\theta_m - \text{asin}\,(n_s \div n_m \times \sin\theta_m)\} \div \tan^2\{\theta_m + \text{asin}\,(n_s \div n_m \times \sin\theta_m)\} \tag{2}$$

$$R_s = \sin^2\{\theta_m - \text{asin}\,(n_s \div n_m \times \sin\theta_m)\} \div \sin^2\{\theta_m + \text{asin}\,(n_s \div n_m \times \sin\theta_m)\} \tag{3}$$

$$\theta_m = \theta_{wmax} + \theta_r \tag{4}$$

   where $r_p$ is an intensity rate of P polarization of light, $r_s$ is an intensity rate of S polarization of light, Rp is an interface reflectivity of the P polarization, $R_s$ is an interface reflectivity of the S polarization, $\theta_{wmax}$ is the maximum value of surface waviness angles at an interface between the recording layer and the adhesive layer, and $\theta_r$ is the maximum value of an incident light angle relative to the normal line to a central plane line.

3. The holographic recording medium according to claim 2, wherein a surface roughness $R_a$ relative to a mean curve obtained at an interface between the recording layer and the adhesive layer is in a range of 5-90 nm.

4. A method of manufacturing a holographic recording medium with a plurality of layers including a recording layer, on which are recorded interference patterns generated by interference of information light and reference light, the method comprising the steps of:

preparing the recording layer and other layers; and
attaching the recording layer to at least one adjacent layer with adhesive.

**5.** The method according to claim 4, further comprising the step of determining a refractive index of the adhesive such that a refractive index $n_s$ of an adhesive layer consisting of the adhesive and a refractive index $n_m$ of the recording layer satisfy the following formulae:

$$0.01 \geq \left( r_p \times R_p \right) + \left( r_s \times R_s \right) \tag{1}$$

$$R_p = \tan^2\{\theta_m - \text{asin}\,(n_s \div n_m \times \sin\theta_m)\} \div \tan^2\{\theta_m + \text{asin}\,(n_s \div n_m \times \sin\theta_m)\} \tag{2}$$

$$R_s = \sin^2\{\theta_m - \text{asin}\,(n_s \div n_m \times \sin\theta_m)\} \div \sin^2\{\theta_m + \text{asin}\,(n_s \div n_m \times \sin\theta_m)\} \tag{3}$$

$$\theta_m = \theta_{wmax} + \theta_r \tag{4}$$

where $r_p$ is an intensity rate of P polarization of light, $r_s$ is an intensity rate of S polarization of light, Rp is an interface reflectivity of the P polarization, $R_s$ is an interface reflectivity of the S polarization, $\theta_{wmax}$ is the maximum value of surface waviness angles at an interface between the recording layer and the adhesive layer, and $\theta_r$ is the maximum value of an incident light angle relative to the normal line to a central plane line.

**6.** The method according to claim 5, further comprising the step of forming a surface of the recording layer such that a surface roughness $R_a$ relative to a mean curve obtained at an interface between the recording layer and the adhesive layer is in a range of 5-90 nm.

FIG. 1

READ/WRITE LIGHT
RW

1

11
14
12
14
13

FIG. 2

INCIDENT READ/WRITE LIGHT

$\theta_r$

ADHESIVE LAYER
WITH REFRACTIVE INDEX $n_s$

WAVINESS ANGLE $\theta_w$

CENTRAL PLANE LINE

MEAN CURVE
AT INTERFACE

RECORDING LAYER
WITH REFRACTIVE INDEX $n_m$

ACTUAL INTERFACE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005017589 A
- JP 2001005368 A
- WO 03014178 A
- JP 2004537620 W